(19) Europäisches Patentamt
European Patent Office
Office européen des brevets

(11) **EP 1 075 617 B2**

(12) **NEW EUROPEAN PATENT SPECIFICATION**

(45) Date of publication and mention
of the opposition decision:
**17.01.2007 Bulletin 2007/03**

(45) Mention of the grant of the patent:
**29.10.2003 Bulletin 2003/44**

(21) Application number: **99948563.4**

(22) Date of filing: **05.05.1999**

(51) Int Cl.:
*F16L 9/12* (2006.01)     *F16L 9/18* (2006.01)
*F16L 11/12* (2006.01)

(86) International application number:
**PCT/SE1999/000750**

(87) International publication number:
**WO 1999/057474 (11.11.1999 Gazette 1999/45)**

(54) **COMPOSITE PIPE, PIPE SYSTEM AND THE USE OF A LIQUID CRYSTAL POLYMER IN A COMPOSITE PIPE FOR CONDUCTING WATER**

VERBUNDROHR, ROHRSYSTEM UND ANWENDUNG VON EINEM FLÜSSIG-KRISTALL-POLYMER IN EINEM VERBUNDROHR FÜR WASSERLEITUNGEN

TUYAU COMPOSITE, SYSTEME DE TUYAUX ET UTILISATION D'UN POLYMERE LIQUIDE CRISTALLIN DANS UN TUYAU COMPOSITE POUR CONDUITES D'EAU

(84) Designated Contracting States:
**AT BE DE DK FI GB IT LU NL**
Designated Extension States:
**LT LV**

(30) Priority: **06.05.1998 SE 9801586**

(43) Date of publication of application:
**14.02.2001 Bulletin 2001/07**

(73) Proprietor: **Uponor Wirsbo AB**
**730 61 Virsbo (SE)**

(72) Inventor: **JOHANSSON, Bengt**
**S-722 16 Västeras (SE)**

(74) Representative: **Hytting, Kerstin Cecilia et al**
**Dr. Ludwig Brann Patentbyra AB,**
**P.O. Box 171 92**
**104 62 Stockholm (SE)**

(56) References cited:
| | |
|---|---|
| **EP-A- 0 030 091** | **EP-A1- 0 026 421** |
| **EP-A2- 0 030 091** | **WO-A-95/23180** |
| **WO-A-96/36194** | **WO-A1-95/23180** |
| **WO-A1-96/30194** | **WO-A1-96/36194** |
| **DE-A- 3 319 519** | **DE-A1- 3 319 515** |
| **GB-A- 1 158 011** | **US-A- 4 614 208** |
| **US-A- 5 150 812** | **US-A- 5 589 236** |

Printed by Jouve, 75001 PARIS (FR)

## Description

### Field of invention

The present invention relates to a composite pipe of polymer material for conducting water, preferably for conducting hot water in district heating systems, hot water systems or tap water systems. The composite pipe is intended for use in a pipe system or pipe construction that includes insulation around the composite pipe so as to lower heat losses from the pipe to the surroundings. The composite pipe includes a base pipe of polymer material, preferably comprised of cross-linked polyethylene. The invention also relates to a pipe system comprising a composite pipe of polymer material and to the use of a liquid crystal polymer in forming a barrier layer in a composite pipe of polymer material for conducting water.

### Description of the background art

It is becoming more and more apparent that the most effective way of lowering or containing energy consumption is to use energy more effectively. For instance, effective use of the low temperatu re heatthat normally occurs as a rest product in process industry and combined power and heating plants requires the application of an effective heat distribution process. If sufficiently effective and inexpensive district heating technology was available, then smaller district heating networks that utilise central solid fuel combustion plants, for instance plants for more peripheral domestic regions, would become economically available.

Steel orcoppertubes are at present often used in district heating systems. These steel orcoppertube systems are, however, expensive to transport, handle and assemble. The corrosion problems that are liable to manifest themselves in these tube systems is a result of the presence of oxygen, galvanic currents and/or galvanic wear in the tubes and significantly lowers the useful life of the metal tube systems.

The use of pipes of polymer material instead of metal tubes enables the transportation and distribution of hot water in district heating networks to be accomplished at a much lower cost. Plastic pipe systems or pipe constructions also have the advantage of being flexible and more bendable, and are therefore easier to handle and assemble.

It is known to use plastic pipes for conducting hot water. Such pipes are preferably made of polyolefins, such as cross-linked polyethylene (PEX), polypropylene or polybutylene. However, plastic pipes are more or less permeable to oxygen and water. Plastic pipes intended for use as hot water pipes in central heating systems, such as in floor heating systems or radiator systems, may be provided with a barrier layer against oxygen diffusion which prevents ambient oxygen from diffusing into the water carried by the pipe; any ingress of oxygen into the pipe is liable to cause corrosion of the metal components included in the system. The practice of coating the outside of such pipes with a barrier layer that satisfactorily lowers or prevents diffusion of oxygen through the pipe constitutes known technology. For instance, material such as ethylene vinyl alcohol (EVOH) has been used to this end.

EP-A-0030091 discloses a gaseous diffusion resistant tube, preferably intended for use in central heating applications. The tube comprises a core of a plastics material, such as cross-linked polyethylene, an outer layer of a plastics impact-resistant material and an intermediate layer of a gaseous diffusion resistant plastics materiel, such as polyvinyl alcohol, acting as a barrier layer against oxygen diffusion preventing ambient oxygen from diffusing into the water carried by the tube.

The plastic pipes, such as PEX pipes or plastic pipes provided with oxygen barriers, are used in hot water systems, such as district heating systems for instance. Heat losses in district heating conduits or other pipe systems are reduced by jacketing the pipes with thermal insulation, for instance with polyurethane foam or a polyethylene-based material. Since this type of pipe system is most often buried in the ground, the insulation is surrounded by an impervious protective jacket, a flexible or rigid outer tube of polyethylene (PE), for instance, which withstands both heat and cold. This outer tubular casing prevents ambient water from penetrating into the insulation and is also designed to withstand the blows and knocks that can occur during transportation and assembly. These pipe systems have a high insulation capacity and the flexibility of the insulation enables the pipes to be readily bent, therewith enabling the system to be easily assembled. One problem in these contexts is that the pipes may be permeable to water, particularly to water at high temperatures. Diffusion of gases, such as oxygen, water vapour, through polymeric material is a well-known phenomenon, as is also the problems caused by such diffusion. Diffusion of gases in polymeric materials is due to the polarity of both the polymer and the penetrant. For instance, polyethylene (PE), which is non-polar, is a good barrier against water, which is polar, but not against oxygen, which is non-polar. The opposite is true for ethylene vinyl alcohol (EVOH) for instance, which is polar and therefore an effective barrier against oxygen but a poor barrier against water. Polar polymers are thus good barriers against non-polar substances, and vice versa. The aforedescribed barrier capacity decreases, however, with elevated temperatures, meaning that even though polyethylene is an effective barrier against water at room temperature, its barrier efficiency is insufficient at temperatures above 60°C, for instance, in the case of certain applications.

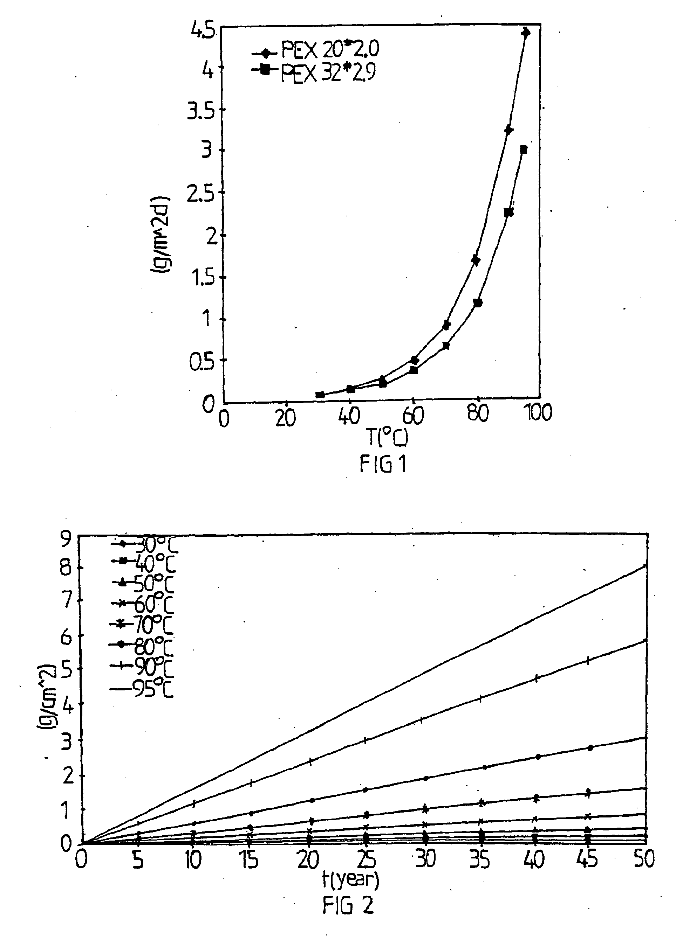

The diffusion through polymeric material is considered mainly to be caused by motion of the polymer molecules, that "pump" forward the penetrant. Polymeric materials have a structure of molecularchains which are "tangled" in each other with relatively large spaces between the molecules. The mobility of molecules can be described with a so-called Arrhenius relationship,

$$f(T)= k \, e^{-Ea/RT}$$

where $E_a$ = the activation energy (J/mol), R = the general gas constant (8.314 J/mol K) and T = the absolute temperature (K). The mobility is thus exponentially dependent on temperature. The aforesaid diffusion problem thus occurs primarily at elevated watertemperatures, such as temperatures that exceed about 60°C (see Figure 1). On the other hand, tests have shown that the pressure of the water in the pipes or conduits has no affect on the water permeability when the water is in liquid phase.

The water conducted by the pipe of such pipe systems will often have a temperature off 60-100°C, which can cause the water conducted through the pipes to diffuse through the pipe walls and out into the surrounding insulation. The water that diffuses through the pipe wall in this way will accumulate over a period of time in the surrounding insulation inwardly of the pipe jacket. Thus, moisture will build-up successively in the insulating material and therewith impair the insulating capacity of the insulation. An increasing moisture content in the insulation will result in greater heat losses in the pipe systems, therewith possibly shortening the useful life of such systems. Figure 1 shows an example of how water diffusion can vary with temperature, while Figure 2 shows an example of water that has accumulated over a period of time in different pipe systems.

The insulating capacity of the insulation in a district heating conduit system, for instance, may disappear completely in certain cases as early as ten years from the time of installation, compared with the expected useful life of between 30 and 50 years with these types of district heating conduits. The outer jacket, made of polyethylene, for instance, is normally disposed in room temperature environments, and hence the diffusion of water through the PE covering is practically negligible. The water that collects in the insulation inwardly of the jacket is therefore unable to exit through said jacket and will therefore build up successively in the insulation, as illustrated in Figure 2.

Attempts have been made to solve this water diffusion problem, by coating the plastic pipe with different known materials that have barrier properties. Various materials have been tested in this respect. Those materials that have been tested include different fluoropolymers (CTFE), such as polychlorotrifluoroethylene (PCTFE) and polyethylene mixtures (PE), for instance, these materials being considered to be the most effective barrier materials at high temperatures. However, it has been observed that the diffusion of water through these pipes has not been influenced to any significant extent by such barrier materials, particularly in the case of hot water pipes where the temperature of the water is between 60-100°C.

<u>EXAMPLE 1</u>

ACLON® 3000 (PCTFE) from Allied Signal was extruded in the form of a stocking of about 0.1 mm in thickness onto a PEX pipe having a diameter of 32 mm and a wall thickness of 2.9 mm, without adhesion. Water diffusion was measured on the ACLON-covered pipe on the one hand and on a corresponding uncovered PEX pipe on the other hand. Water diffusion was measured with a MOCON instrument, namely MOCON® PERMATRAN-W® 3/31, which was supplemented with a Capture Volume Chamber (CVC). The pipes used in the tests were placed in a sealed chamber and the outer surfaces of the pipes were rinsed with a carrier gas, which was then passed to the measuring instrument. Water was circulated in the pipes at a specific temperature and at a specific pressure. The water temperature was 90°C in both pipes. Diffusion and permeability were calculated from the measurement values obtained in accordance with measuring method ASTMF-1249. The following values were obtained with uncovered PEX 32*2.9:

p = 7.933 g mm/m$^2$ d
q = 2.735 g/m$^2$ d
WVTR = 0.11 g/pack d,

The following corresponding values were obtained for PEX 32*2.9 + 0.1 ACLON$^R$:

p = 6.563 g mm/m$^2$ d
q = 2.263 g/m$^2$ d
WVTR = 0.091 g/pack d, where
p = permeability, taking the wall thickness into account;

q = diffusion in grams per square metre of the outer cylindrical surface of the pipe;
WVTR = Water Vapour Transmission Rate, which gives the diffusion for the tested unit per calendar day;
d = calendar day; and
pack = unit.

The result shows a reduction in water diffusion with respect to the covered pipe, calculated on a WVTR of

$$0.11 - 0.091/0.11 = 17\%,$$

which is only a marginal improvement and thus an insufficient improvement of the barrier capacity in the pipe.

EXAMPLE 2

A PEX pipe measuring 32 mm in diameter and 2.9 mm in wall thickness was coated with a layer of mica-filled PE, PREFILL TP 4061 from Kemira Oy, to a thickness of about 0.2 mm. Water diffusion at 95°C was measured on a coated pipe, 485 mm in length, and on a non-coated reference pipe, 489 mm in length, in the same way as that described in Example 1. The following result was obtained:

|  | WVTR (g/d) |
|---|---|
| PEX 32*2.9 coated | 0.20 |
| PEX 32*2.9 non-coated | 0.20 |

The covered, or coated, pipe showed no change in water diffusion, and consequently the coating layer was considered to have no barrier effect.

EXAMPLE 3

A PEX pipe measuring 16 mm in diameter and 2 mm in wall thickness was coated with a silicon-based barrier layer, ORMOCER RC/653 from Frauenhofer Institut, Würzburg. The PEX pipe was coated solely on its inner surface in a first instance, solely on its outer surface on a second instance and on both its inner and outer surfaces on a third instance. Pipes coated in this way were compared with a non-coated reference pipe. The watertemperature in all pipes was 95°C. The following water diffusion values were obtained:

|  | W (g/d) |
|---|---|
| PEX 16*2.0 non-coated | 0.112 |
| PEX 16*2.0+internal coating RC/653 | 0.108 |
| PEX 16*2.0+outside coating RC/653 | 0.109 |
| PEX 16*2.0+ins., outs. coating RC/653 | 0.112 |

No essential change in water diffusion was observed with the coated pipes, and consequently the coating/coatings was/were not considered to have any significant effect on barrier capacity.
It is also known to coat pipes made of PEX with a metal layer whose thickness is sufficient to provide an effective barrier against water diffusion as well as oxygen diffusion. A pipe of this type is disclosed in DE-A-3319515. However, these commercially available pipes have not been found to function satisfactorily. The problem in this case is that metals and polymers have significantly different coefficients of thermal expansion. Consequently, the temperature variations occurring in district heating pipes and conduits cause PEX pipes and metal layers to delaminate. The metal layer is therefore liable to split or crack after only a short time in use, causing the barrier effect to disappear. Metal barrier layers also cause problems with respect to flexibility, adhesion and corrosion.

**Basic concept of the invention**

The object of the present invention is to provide a solution to the aforesaid problems with a composite pipe or conduit that has barrier properties against water diffusion and oxygen diffusion and which has long-term properties that enable a barrier capacity to be maintained over a long period of time at the pressure and temperature requirements placed on such pipes. The barrier properties of the composite pipe shall prevent water from diffusing out into the insulation around the pipe and also prevent ambient oxygen from diffusing into the pipe and causing corrosion of the metal parts in the system.

In accordance with the invention this object is achieved with the composite pipe of claim 1, the pipe system of claim 15 and the use of LCP in forming a barrier layer of claim 18.

In accordance with the invention, a base pipe of polymer material has been coated with a layer of liquid crystal polymer (LCP) which exhibits barrier properties against the diffusion of water and oxygen even at high water temperatures.

It has been found that the permeability of liquid crystal polymers is not as temperature dependent as conventional polymers, which is probably due to the special molecular structure of LCP materials. Liquid crystal polymers (LCP) do not have the aforedescribed molecular structure, but have a structure of stiff, rod-like macromolecules, this structure thus being markedly different from the structure of polyolefins, for instance. The particular molecular structure of LCP materials imparts to said materials mechanical properties that are an improvement on the mechanical properties of conventional polymers, and consequently the molecular mobility is also different. Liquid crystal polymers are materials which are comprised of carbon, hydrogen and oxygen and which have earlier documented good properties in the form of high gas impermeability, including watervapour, at temperatures in the region of 20-40°C. A method of extruding liquid crystal polymers is known to the art and is described in more detail in US-A-5,589,236.

According to the invention the base pipe is preferably made of cross-linked polyethylene. Cross-linking, that is, the formation of spatial networks or cross-links in polymers may be carried out in accordance with different principles. According to one advantageous principle the cross-linking is achieved by means of radicals which either may be formed by direct action of radiation energy on the polymer chain or which may be formed by means of additives, cross-linking agents, such as organic peroxides or azo-compounds. In the latter case the cross-linking reaction normally is triggered by means of heat.

According to the invention, one or more intermediate layers of adhesive material is/are applied between the inner base pipe and the outer barrier layer, therewith enhancing the adhesion between the two materials. This enhanced adhesion further improves the mechanical properties and barrier properties of the composite pipe. The adhesion or tie layer may comprise a modified polyethylene, for instance maleic acid anhydride modified polyethylene, or a cross-linked polyethylene.

According to one preferred embodiment of the invention, the plastic pipe system includes an inner base pipe, preferably made of cross-linked polyethylene, with a layer of liquid crystal polymer applied on the outer surface thereof.

According to still another preferred embodiment of the invention, the composite pipe includes a base pipe, preferably comprised of cross-linked polyethylene, having an inner layer of liquid crystal polymer. The composite pipe further includes an outer oxygen-barrier layer and may also be provided with an intermediate adhesion layer between base pipe and LCP layer and between base pipe and oxygen-barrier layer, respectively. This embodiment afford the advantage whereby respective barrier layers border directly on the medium whose diffusion through the composite pipe shall be prevented.

The permeability of PEX pipes that are coated with LCP layer, both with and without an intermediate adhesion layer, has quite a different temperature dependency to that of the non-coated PEX pipes or pipes coated with other polymeric barrier materials, such as PCTFE for instance. With respect to the diffusion of water from a composite pipe comprising a PEX pipe coated with LCP into the insulation of a district heating conduit, measurements made to date have shown that the useful life of a conduit that includes a PEX-pipe that is coated with LCP will have a useful life which is from 2-4 times longer than that of a district heating conduit in which the pipe is comprised solely of PEX.

Within the scope of the invention, liquid crystal polymers (LCP) include pure liquid crystal polymers, such as the commercially available product VECTRA® A-950 (Hoechts), for instance, and also includes modified liquid crystal polymers, of which fibre glass filled LCP, such as VECTRA® (R) A-515 (Hoechts), and mixtures of LCP and fluoropolymers, such as VECTRA® (R) A-430 (Hoechts), are some examples. Also included are liquid crystal polymers (LCP) mixed with material/materials exhibiting affinity to the adhesive material and/or cross-linked polyethylene. Other known and commercially available pure and modified LCP materials are included in the term liquid crystal polymers (LCP) in accordance with the invention.

## Brief description of the drawings

The invention will now be described in more detail with reference to the accompanying drawings which illustrate an exemplifying embodiment of the invention.

Figure 1 shows diagrammatically the dependency of water permeability on temperature in respect of a non-coated PEX pipe.

Figure 2 shows diagrammatically water that has accumulated over a period of time as a result of its diffusion through the wall of a non-coated PEX pipe.
Figure 3 is a cross-sectional view of a composite pipe according to one embodiment of the invention.
Figure 4 is a principle illustration of a pipe system according to one embodiment of the invention.

## Detailed description of the invention

Figure 1 is a diagram which shows the dependency of water diffusion on temperature as measured in respect of non-coated PEX pipes of two different sizes. It will be evident from the diagram that diffusion through a non-coated pipe has an exponential temperature dependency and that the water diffusion (given in $g/m^2$ per calendar day) greatly increases in the temperature range off 60-100°C shown in the diagram

Figure 2 shows the amount of water that had accumulated as a result of diffusion over a time period of 0-50 years in respect of a non-coated PEX pipe that measured 20*2.0 mm and that conducted water heated to temperatures between 30-95°C. The diagram illustrates computed values of how the accumulated water diffusion would theoretically increase each year on one square centimetre of the outer surface of the pipe, with the assumption that this diffusion will not vary with time. 1 $g/cm^2$ of water means a surface water layer of 1 cm in depth. It will also be seen from the diagram that at a water temperature of 95°C, for instance, a water layer measuring about 1.8 cm in depth will have formed after ten years, that after twenty-five years a water layer measuring 4 cm in depth will have formed, and that after fifty years there will have formed a water layer of 8 cm in depth. These theoretical values are never reached in an actual pipe system, due to the fact that the net diffusion will stop when a saturated state occurs on the outside of the pipe.

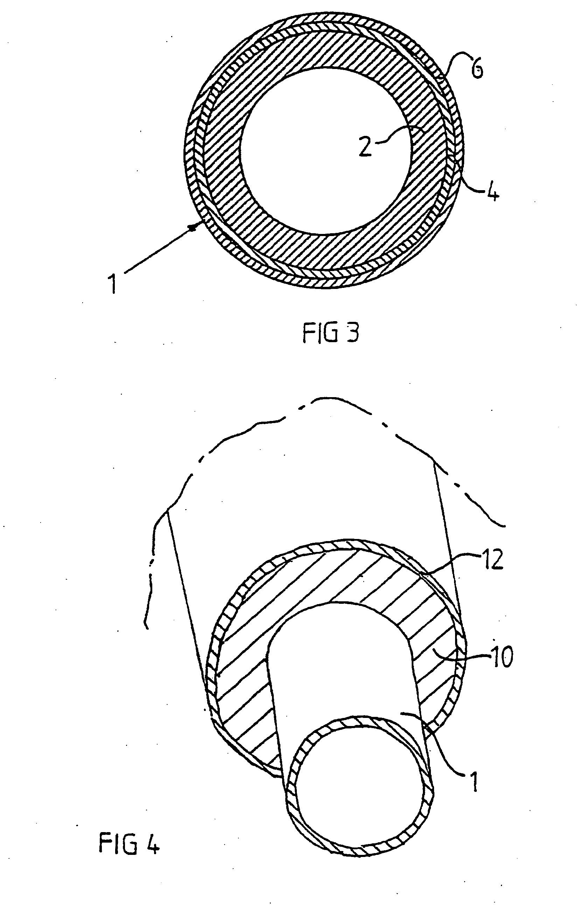

Figure 3 is a cross-sectional view of a composite pipe 1 according to one embodiment of the invention. The composite pipe 1 includes an inner base pipe 2, preferably comprised of cross-linked polyethylene (PEX). The base pipe 2 is embraced by a barrier layer 6 extruded onto the base pipe. One or more intermediate layers 4 of an adhesive material, an adhesive layer, may be disposed between the inner base pipe 2 and the barrier layer 6. The adhesive layer/ layers 4 is/are intended to enhance adhesion between the base pipe 2 and the outer barrier layer 6 and will conveniently comprise a modified polyethylene (PE), such as a polyethylene modified with maleic acid anhydride, for instance. The adhesive or tie layer/layers may alternatively comprise cross-linked polymers, such as cross-linked polyethylene, or may be made of material/materials exhibiting barrier properties against diffusion of various substances.

The barrier layer 6 is comprised of a liquid crystal polymer (LCP), such as one of the commercially available products designated VECTRA® A-950 (pure LCP), VECTRA® A-515 (fibre glass filled LCP) and VECTRA® A-430 (mixture of LCP and fluoropolymer). Alternatively, the LCP layer may comprise some other commercially available product comprised of either pure liquid crystal polymers or LCP mixtures, reinforced or modified LCP material.

### EXAMPLE 4

A first PEX pipe measuring 32*2.9 mm was coated with a layer of pure LCP, VECTRA® A-950, to a thickness of 0.1 mm, and a second PEX pipe of the same dimensions was coated with a layer of fibre glass filled LCP, VECTRA® A-515, to a thickness of 0.1 mm. The LCP layers, or coverings, were placed on the outside of respective PEX pipes in the form of a loose stocking without adhesion, in both instances. The diffusion of water from two coated pipes was measured at a water temperature of 95°C and compared with the diffusion of water from an non-coated pipe at the same water temperature. Diffusion was measured by the ASTM F-1249 method. The following values were obtained with respect to water diffusion q from the outer cylindrical surfaces of respective pipes ($g/m^2$ d):

|  | q |
| --- | --- |
| PEX 32*2.9 mm + 0.1 VECTRA® A-950 | 1.7 |
| PEX 32*2.9 mm + 0.1 VECTRA® A-515 | 1.9 |
| PEX 32*2.9 mm non-coated | 3.6 |

The results show that the water diffusion from the outer cylindrical surface of the pipe covered with a layer of 0.1 mm VECTRA® A-950 or VECTRA® A-515 was essentially halved from 3.6 to 1.7 and 1.9 $g/m^2$ d, respectively, in comparison with the uncovered PEX pipe.

### EXAMPLE 5

A first PEX pipe was coated with VECTRA® A-950 (pure LCP) without intermediate adhesion, a second PEX pipe was coated with VECTRA® A-515 (fibre glass filled LCP) with intermediate adhesive layer, and a third PEX pipe was coated with VECTRA® A-430 (mixture of LCP and fluoropolymer) with an intermediate adhesive layer. Adhesion between PEX pipe and LCP layer was achieved by extruding a BYNEL® (R) adhesive layer on the PEX pipe, said adhesive layer being coated with a further adhesive layer of EASTMAN® (R) AQ 1350. The water diffusion in the three pipes was measured at a water temperature of 70°C and compared with the water diffusion in a non-coated PEX pipe at a corresponding water temperature. The following diffusion values q were obtained in gram per pipe metre and calendar day:

|  | q (70°C) |
| --- | --- |
| PEX pipe non-coated | 0.086 |
| PEX pipe + VECTRA® A-950 | 0.058 |
| PEX pipe + adhesive layer + VECTRA® A-515 | 0.021 |
| PEX pipe + adhesive layer + VECTRA® A-430 | 0.028 |

It will be evident, among other things, from the aforedescribed Example, that the water diffusion of an LCP-coated pipe having an intermediate adhesive layer has been lowered to about 25% of the value of a non-coated pipe at a temperature of about 70°C. With respect to reduced insulating capacity as a result of water diffusion from the pipe system, the useful life of the pipe system can be increased about 4 times by coating the PEX pipe with an adhesive layer and an LCP layer, i.e. from 5 to 20 years or from 10 to 40 years, for instance. Because the permeability of an LCP-coated pipe has a temperature dependency which is more beneficial in the present context than in the case of a non-coated pipe, the percentile diffusion is lowered still further at higher temperatures, for instance temperatures of 90°C.

EXAMPLE 6

Two of the LCP-coated PEX pipes in Example 5 were also used to determine the diffusion of oxygen through coated pipes and the values obtained compared with oxygen diffusion through a non-coated pipe. The measuring process was carried out with a according to DIN 4726. The following values were obtained in mg per litre and per calendar day:

|  | Oxygen diffusion (mg/l d) |
| --- | --- |
| PEX pipe non-coated | 3.00 |
| PEX pipe + adhesive layer + VECTRA® A-515 | 0.08 |
| PEX pipe + adhesive layer + VECTRA® A-430 | 0.09 |

The results show that in comparison with a non-coated PEX pipe, the LCP-coated pipes had a marked improvement with respect to oxygen diffusion. The barrier capacity of the LCP-coated pipes against oxygen diffusion is about 30 times more effective than the non-coated PEX pipe.
In one preferred embodiment of the invention, the base pipe 2 has a wall thickness of about 1.5-25 mm, preferably about 1.8-5 mm. According to this preferred embodiment, the intermediate adhesive layer 4 has a thickness of about 25-250 $\mu$m, preferably 50-125 $\mu$m, and the surrounding barrier layer 6 has a thickness of about 10-250 $\mu$m, preferably 20-125 $\mu$m.
The composite pipe as well as the pipe systems may be manufactured such that the base pipe and additional layers are coextruded and then fed through a cross-linking zone in a continuos process. Composite pipes with oriented molecular chains and thus improved strength may be manufactured from extruded/coextruded blanks of relatively thick pipes of polymer material, such as polyolefine or PVC, which are heated and expanded to the final oriented shape. However, it should be emphasized that the inventive composite pipes may be manufactured according to othermethods. For instance, one or several layers of the composite pipe may be extruded separately on the base pipe.
It should be empasized that the above description of a preferred embodiment of a composite pipe according to the invention only is given as a non-limiting example and that the composite pipe may be varied in many ways within the scope of the attached Claims. The number and the purpose of different inner, outer or internal layers on or in the base pipe are optional and one or several LCP layers may be coated on the inside of, on the outside of or in the base pipe. One variant could be a composite pipe including from inside to outside an inner flow layer, optional adhesive layer, LCP layer, optional adhesive layer, PEX pipe, optional adhesive layer and an outer protective layer and/or a barrier layer against oxygen diffusion.
It should also be noted that the adhesive layer/layers may form barriers against other substances, such as carbon dioxide or hydrocarbon, for instance.
Figure 4 is a perspective, schematic illustration of one end of a conduit that forms a prefabricated pipe system or pipe construction. The conduit includes an inner plastic pipe 1 constructed in accordance with the invention as described above, for instance as shown in Figure 3, and intended for conducting hot water. The pipe system includes a thermal insulation in the form of an embracing insulating layer 10 comprised, for instance, of polyurethane foam or cross-linked polyethylene foam, which can be applied directly onto the composite pipe. The insulating layer 10 is embraced by an outer casing sleeve 12 which holds the layer 10 firm. The casing sleeve 12 may comprise a polyethylene pipe. This pipe may have either a smooth or a corrugated surface and will preferably be sufficiently flexible to enable it to be bent or curved.

As shown in Figure 4, the prefabricated conduit may include a centrally disposed composite pipe. However, the conduit may alternatively comprise prefabricated units that include two or more composite pipes disposed parallel or concentric with one another inwardly of the outer casing, for different types of media conducting.

Because the inventive pipe systems have a much longer useful life than present-day systems, they enable significant savings to be made when used. The inventive pipe systems are thus highly beneficial in comparison with corresponding metal tube systems. The pipe systems are also easy to handle and install, due to their bendability and flexibility, therewith enabling the whole of the installation process to be effective quickly and in a cost-effective manner.

It will be understood that the invention is not restricted to the aforedescribed and illustrated exemplifying embodiments thereof and that modifications can be made within the scope of the following Claims.

The inventive composite pipe may, for instance, be provided with a further polymer layer on the LCP layer. This further polymer layer is intended to shield against mechanical influences and/or may provide a supplementary oxygen-barrier layer. According to the invention, the composite pipe may also include an inner base pipe, preferably a PEX pipe, and a surrounding LCP layer without an intermediate adhesive layer. The composite pipe may also include an LCP layer disposed within, and preferably centrally in, the base pipe, and optionally an adhesive layer may also be provided on both sides of the LCP layer. The composite pipe may also include more than one LCP layer, disposed on one or both sides of the base pipe.

## Claims

1. A composite pipe of polymer material for conducting water, preferably in district heating systems, heating conduit systems or tap water systems, said composite pipe including a base pipe, of cross-linked polyethylene, and at least one additional layer, said additional layer (6) being formed of a liquid crystal polymer and forming a barrier against the diffusion of water through the composite pipe (1) at hot water temperatures, one or more intermediate layers (4) of adhesive material being disposed between the base pipe (2) and the barrier layer (6).

2. A composite pipe according to Claim 1, said barrier layer (6) also forming a barrier against the diffusion of oxygen through said composite pipe (1).

3. A composite pipe according to any one of Claims 1-2, said barrier layer (6) being an outer layer that embraces said base pipe (2).

4. A composite pipe according to any one of Claims 1-2, said barrier layer (6) being an inner layer embraced by said base pipe (2).

5. A composite pipe according to any one of Claims 1-2, said barrier layer (6) being a layer disposed within the wall of the base pipe (2).

6. A composite pipe according to any one of Claims 1-5, the liquid crystal polymer of said barrier layer (6) being a modified liquid crystal polymer.

7. A composite pipe according to Claim 1, the adhesive material being modified polyethylene.

8. A composite pipe according to Claim 1, said layer/layers of adhesive material being cross-linked.

9. A composite pipe according to any one of Claims 1-8, the liquid crystal polymer of said barrier layer (6) being mixed with material exhibiting affinity to the adhesive material and/or the material of the base pipe (2).

10. A composite pipe according to any one of Claims 1-9, the base pipe (2) having a wall thickness of 1.5-25 mm, preferably 1.8-5 mm, and the barrier layer (6) having a thickness of 10-250 $\mu$m, preferably 20-125 $\mu$m.

11. A composite pipe according to any one of Claims 6-10, the adhesive layer (4) having a thickness of 25-250 $\mu$m,

preferably 50-125 μm.

12. A composite pipe according to any one of Claims 1-11, said pipe (1) including a further polymer layer surrounding the other layers of said pipe (1) and forming a protective layer against mechanical influences and/ or a barrier layer against oxygen diffusion.

13. A composite pipe according to any one of Claims 1-12, the base pipe (2) and said layers (6) being co-extruded and then fed through a cross-linking zone.

14. A composite pipe according to any one of Claims 1 - 13, the base pipe (2) and said layers (6) being oriented by being heated to a suitable orienting temperature and then being expanded and cooled.

15. A pipe system for conducting water, preferably for district heating, central heating, and/or tap water, and comprising a composite pipe of polymer material (1), thermal insulation (10) surrounding said composite pipe, and an outer casing (12), said composite pipe (1) including a base pipe (2), of cross-linked polyethylene, and an additional layer (6), the additional layer (6) being formed of a liquid crystal polymer and forming a barrier against the diffusion of water at hot water temperatures from the interior of the composite pipe (1) into the thermal insulation (10) surrounding said pipe.

16. A pipe system according to Claim 15, the composite pipe (6) including one or more intermediate layers (4) of adhesive material between the base pipe (2) and the barrier layer (6).

17. A pipe system according to any one of Claims 15-16, the pipe system including at least two composite pipes disposed inwardly of the outer casing (12).

18. The use of a liquid crystal polymer in forming a barrier layer (6) in a composite pipe of polymer material for conducting water, said barrier layer (6) forming a barrier against the diffusion of water through said composite pipe at hot water temperatures.

**Patentansprüche**

1. Verbundrohr aus Polymermaterial zur Leitung von Wasser, vorzugsweise in Fernheizsystemen, Heizleitungssystemen oder Leitungswassersystemen, wobei das Verbundrohr ein Basisrohr, aus vernetztem Polyethylen, und zumindest eine zusätzliche Schicht umfasst, wobei die zusätzliche Schicht (6) aus einem Flüssigkristallpolymer gebildet ist und eine Barriere gegen die Diffusion von Wasser durch das Verbundrohr (1) bei hohen Wassertemperaturen bildet, und wobei eine oder mehrere intermediäre Schichten (4) aus adhäsivem Material zwischen dem Basisrohr (2) und der Barrierenschicht (6) angeordnet sind.

2. Verbundrohr gemäß Anspruch 1, worin die Barrierenschicht (6) auch eine Barriere gegen die Diffusion von Sauerstoff durch das Verbundrohr (1) bildet.

3. Verbundrohr gemäß irgendeinem der Ansprüche 1 bis 2, wobei die Barrierenschicht (6) eine äußere Schicht ist, die das Basisrohr (2) umschließt.

4. Verbundrohr gemäß irgendeinem der Ansprüche 1 bis 2, wobei die Barrierenschicht (6) eine innere Schicht ist, die von dem Basisrohr (2) umschlossen ist.

5. Verbundrohr gemäß irgendeinem der Ansprüche 1 bis 2, worin die Barrierenschicht (6) innerhalb der Wand des Basisrohres (2) angeordnet ist.

6. Verbundrohr gemäß irgendeinem der Ansprüche 1 bis 5, wobei das Flüssigkristallpolymer der Barrierenschicht (6) ein modifiziertes Flüssigkristallpolymer ist.

7. Verbundrohr gemäß Anspruch 1, worin das adhäsive Material modifiziertes Polyethylen ist.

8. Verbundrohr gemäß Anspruch 1, worin die Schicht/Schichten des adhäsiven Materials vernetzt ist/sind.

**9.** verbundrohr gemäß irgendeinem der Ansprüche 1 bis 8, worin das Flüssigkristallpolymer der Barrierenschicht (6) gemischt ist mit einem Material, welches Affinität gegenüber dem adhäsiven Material und/oder dem Material des Basisrohres (2) aufweist.

**10.** Verbundrohr gemäß irgendeinem der Ansprüche 1 bis 9, worin das Basisrohr (2) eine Wandstärke von 1,5 bis 25 mm, vorzugsweise 1,8 bis 5 mm, und die Barrierenschicht (6) eine Dicke von 10 bis 250 $\mu$m, vorzugsweise 20 bis 125 $\mu$m, aufweist.

**11.** Verbundrohr gemäß irgendeinem der Ansprüche 6 bis 10, worin die adhäsive Schicht (4) eine Dicke von 25 bis 250 $\mu$m, vorzugsweise 50 bis 125 $\mu$m, aufweist.

**12.** Verbundrohr gemäß irgendeinem der Ansprüche 1 bis 11, worin das Rohr (1) eine weitere Polymerschicht umfasst, die die anderen Schichten des Rohres (1) umschließt und eine Schutzschicht gegen mechanische Einflüsse und/ oder eine Barrierenschicht gegen Sauerstoffdiffusion bildet.

**13.** Verbundrohr gemäß irgendeinem der Ansprüche 1 bis 12, worin das Basisrohr (2) und die Schichten (6) koextrudiert und anschließend durch eine Vernetzungszone geführt werden.

**14.** Verbundrohr gemäß irgendeinem der Ansprüche 1 bis 13, worin das Basisrohr (2) und die Schichten (6) durch Erhitzen auf eine geeignete Orientierungstemperatur orientiert und anschließend expandiert und abgekühlt werden.

**15.** Rohrsystem zum Leiten von Wasser, vorzugsweise für Fernheizungen, Zentralheizungen und/oder Leitungswasser, und umfassend ein Verbundrohr aus Polymermaterial (1), thermische Isolation (10), die das Verbundrohr umgibt, und eine äußere Verkleidung (12), wobei das Verbundrohr (1) ein Basisrohr (2), aus vernetztem Polyethylen, und eine zusätzliche Schicht (6) umfasst, wobei die zusätzliche Schicht (6) gebildet ist aus einem Flüssigkristallpolymer und eine Barriere gegen die Diffusion von Wasser bei hohen Temperaturen vom Inneren des Verbundrohres (1) in die thermische Isolation (10), die das Rohr umgibt, bildet.

**16.** Rohrsystem gemäß Anspruch 15, wobei das Verbundrohr (1) eine oder mehrere intermediäre Schichten (4) aus adhäsivem Material zwischen dem Basisrohr (2) und der Barrierenschicht (6) umfasst.

**17.** Rohrsystem gemäß irgendeinem der Ansprüche 15 bis 16, wobei das Rohrsystem zumindest zwei Verbundrohre umfasst, die im Inneren der äußeren Verkleidung (12) angeordnet sind.

**18.** Verwendung eines Flüssigkristallpolymers zur Bildung einer Barrierenschicht (6) in einem Verbundrohr aus Polymermaterial zur Leitung zur Wasser, wobei die Barrierenschicht (6) eine Barriere bildet gegen die Diffusion von Wasser durch das Verbundrohr bei hohen Wassertemperaturen.

**Revendications**

**1.** Tuyau composite de matériau polymère pour conduire l'eau, de préférence dans des systèmes de chauffage de quartier, des systèmes de conduit de chauffage ou des systèmes d'eau courante, ledit tuyau composite comprenant un tuyau de base, de polyéthylène réticulé, et au moins une couche additionnelle, ladite couche additionnelle (6) étant formée d'un polymère à cristaux liquides et formant une barrière contre la diffusion de l'eau à travers le tuyau composite (1) à des températures d'eau chaude, une ou plusieurs couches intermédiaires (4) de matériau adhésif étant disposées entre le tuyau de base (2) et la couche barrière (6).

**2.** Tuyau composite selon la revendication 1, ladite couche barrière (6) formant également une barrière contre la diffusion de l'oxygène à travers ledit tuyau composite (1).

**3.** Tuyau composite selon l'une quelconque des revendications 1-2, ladite couche barrière (6) étant une couche externe qui épouse ledit tuyau de base (2).

**4.** Tuyau composite selon l'une quelconque des revendications 1-2, ladite couche barrière (6) étant une couche interne épousée par ledit tuyau de base (2).

**5.** Tuyau composite selon l'une quelconque des revendications 1-2, ladite couche barrière (6) étant une couche disposée dans la paroi du tuyau de base (2).

6. Tuyau composite selon l'une quelconque des revendications 1-5, le polymère à cristaux liquides de ladite couche barrière (6) étant un polymère à cristaux liquides modifié.

7. Tuyau composite selon la revendication 1, le matériau adhésif étant du polyéthylène modifié.

8. Tuyau composite selon la revendication 1, ladite / lesdites couche / couches de matériau adhésif étant réticulée(s).

9. Tuyau composite selon l'une quelconque des revendications 1-8, le polymère à cristaux liquides de ladite couche barrière (6) étant mélangé avec un matériau présentant une affinité avec le matériau adhésif et/ou le matériau du tuyau de base (2).

10. Tuyau composite selon l'une quelconque des revendications 1-9, le tuyau de base (2) ayant une épaisseur de paroi de 1,5 - 25 mm, de préférence 1,8 - 5 mm, et la couche barrière (6) ayant une épaisseur de 10 - 250 $\mu$m, de préférence 20 - 125 $\mu$m.

11. Tuyau composite selon l'une quelconque des revendications 6-10, la couche adhésive (4) ayant une épaisseur de 25 - 250 $\mu$m, de préférence 50 - 125 $\mu$m.

12. Tuyau composite selon l'une quelconque des revendications 1-11, ledit tuyau (1) comprenant en outre une couche polymère entourant les autres couches dudit tuyau (1) et formant une couche protectrice contre les influences mécaniques et/ou une couche barrière contre la diffusion de l'oxygène.

13. Tuyau composite selon l'une quelconque des revendications 1-12, le tuyau de base (2) et lesdites couches (6) étant coextrudés et ensuite introduits dans une zone de réticulation.

14. Tuyau composite selon l'une quelconque des revendications 1-13, le tuyau de base (2) et lesdites couches (6) étant orientés en étant chauffés à une température d'orientation appropriée et ensuite étant expansés et refroidis.

15. Système de tuyau pour conduire l'eau, de préférence pour le chauffage de quartier, le chauffage central, et/ou l'eau courante, et comprenant un tuyau composite de matériau polymère (1), une isolation thermique (10) entourant ledit tuyau composite, et un revêtement externe (12), ledit tuyau composite (1) comprenant un tuyau de base (2), de polyéthylène réticulé, et une couche additionnelle (6), la couche additionnelle (6) étant formée d'un polymère à cristaux liquides et formant une barrière contre la diffusion de l'eau à des températures d'eau chaude de l'intérieur du tuyau composite (1) dans l'isolation thermique (10) entourant ledit tuyau.

16. Système de tuyau selon la revendication 15, le tuyau composite (1) comprenant une ou plusieurs couches intermédiaires (4) de matériau adhésif entre le tuyau de base (2) et la couche barrière (6).

17. Système de tuyau selon l'une quelconque des revendications 15-16, le système de tuyau comprenant au moins deux tuyaux composites disposés à l'intérieur du revêtement externe (12)_

18. Utilisation du polymère à cristaux liquides en formant une couche barrière (6) dans un tuyau composite de matériau polymère pour conduire l'eau, ladite couche barrière (6) formant une barrière contre la diffusion de l'eau à travers ledit tuyau composite à des températures d'eau chaude.

FIG 1

FIG 2

FIG 3

FIG 4